Europäisches Patentamt

European Patent Office

Office européen des brevets

(11) Publication number : **0 499 469 A2**

# EUROPEAN PATENT APPLICATION

(21) Application number : 92301191.0

(22) Date of filing : 13.02.92

(51) Int. Cl.$^5$ : **G06F 15/80**

(30) Priority : **13.02.91 JP 40603/91**
**08.03.91 JP 43600/91**

(43) Date of publication of application :
**19.08.92 Bulletin 92/34**

(84) Designated Contracting States :
**AT BE CH DE DK ES FR GB GR IT LI LU MC NL PT SE**

(71) Applicant : **SUMITOMO CEMENT CO. LTD.**
**1, Kanda Mitoshiro-cho**
**Chiyoda-ku Tokyo 101 (JP)**
(71) Applicant : **SEIKO INSTRUMENTS INC.**
**31-1, Kameido 6-chome Koto-ku**
**Tokyo 136 (JP)**

(72) Inventor : **Takemura, Yasuhiro**
**1-1 Nanatsugi-dai Shiroi-machi**
**Inba-gun Chiba (JA)**
Inventor : **Takesue, Toshiharu**
**1-Choume, 24-1-403 Kurosuna-dai**
**Chiba-shi, Chiba 281 (JP)**
Inventor : **Yamazaki, Hideki**
**1-17-30 Kamiaokinishi**
**Kawaguchi-shi Saitama (JP)**

(74) Representative : **Maggs, Michael Norman et al**
**Kilburn & Strode 30 John Street**
**GB-London WC1N 2DD (GB)**

(54) Artificial neural network pattern recognition system.

(57)    An artificial neural network pattern recognition system, preferably an optical neural network, has an input layer, an output layer and at least first and second intermediate layers. Outputs from the first intermediate layer depend upon the cross-correlation between the fixed weightings of the connections between the input layer and the first intermediate layer, and the input pattern which is fed into the input layer.

# FIG. 8

## BACKGROUND OF THE INVENTION

### Field of the Invention

The present invention relates to an artificial neural network pattern recognition system to be utilized in the field of optical data processing such as identification, recognition, reviewing, inference, and associating of informations and data in form of images, letters and voice.

### Description of the Prior Art

Artificial neural net models have been studied for many years in the hope of achieving human-like performance in the field of computer processing. These models are composed of many nonlinear computational elements operating in parallel and arranged in patterns reminiscent of biological neural nets. Computational elements or units are connected via weights that are typically adapted during use to improve performance. Artificial neural net models or simply "neural network" can go by many names such as connection models, parallel distributed processing models and neuromorphic systems. All these models attempt to achieve good performance via dense interconnection of simple computational elements. Neural networks have greatest potential in areas such as image recognition, pattern classification where many hypotheses are pursued in parallel, high computation rates are required. Instead of performing a program of instructions in sequence as in a von Neumann computer, neural networks explore many competing hypotheses simultaneously using massive parallel nets composed of many computational elements connected by links with variable weights.

As a technology to process data and information such as identification, association and inference at which von Neumann computer is not good, there has been noted a technology of neural network system or optical processing assembly system. Especially, an error back-propagation training algorithm (hereinafter, refer to as "BP method") can enable to determine a connecting weight to connect each of the units contained in the neural network system, or a connection weighting value to connect each of the signal processing elements in the system which is patterned after biological neuron tissues and to which multiple of inputs can be processed to conclude one output with flexible recognition.

The respective correlation can be obtained by respectively producing or estimating the correlation of the pattern which is to be reviewed or to be recognized and classified, with each of the reference patterns. Then, the obtained correlation is represented by the values corresponding to the light intensities of the correlation output of each of the reference patterns.

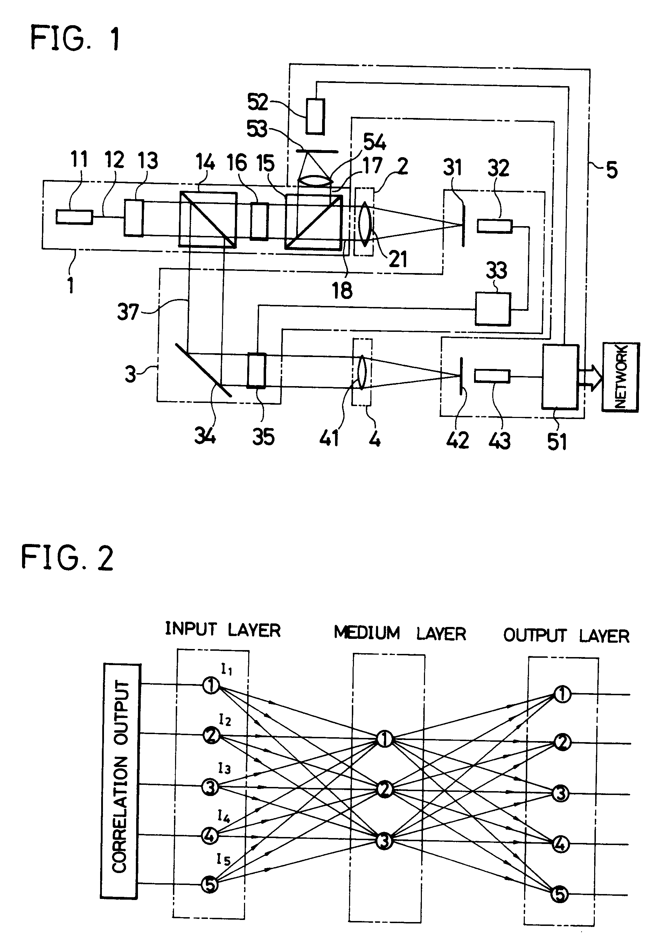

FIG. 2 shows a typical conventional structure of an artificial neural network system. The processing assembly system of the neural network, which is operated and learned by an error back-propagation training algorithm (hereinafter refer to as "BP method" comprises a plurality of the units with the layered structure which is composed essentially of three or more layers in general case. There are provided an input layer to input pattern signals, a output layer to output recognition output signals, and the other layer(s) so called intermediate layer or hidden layer.

In FIG. 2, there are one intermediate layer ( refer to as "medium layer" in the drawings) containing three units, an input layer containing five units, and an output layer containing five units. This is only illustration, and the number of the medium layers and the numbers of each of the layers can be changed depending to the requirement, and variety of necessary condition.

Each of the input values; the values in response to the light intensities of the correlation output obtained from a correlation calculation between the pattern to be reviewed or tested and each of the reference patterns is respectively fed, as it is, from the input layer, into the intermediate layer, and further respectively fed from the intermediate layer into the output layer, and then, the output is discharged from the output layer, and utilized.

The input values to be fed into each of the units of the intermediate layer, and the input values to be fed into each of the units of the output layer are represented by the function $F(x)$, wherein x is a total sum of the values obtained by multiplication of each of the output values to be fed from the preceding layer respectively with each of the connecting weights corresponding to each of the connections, in addition to the biasing values;

$$F(x) = 1/[1 + \exp(-x)]$$

The function $F(x)$ is a non-linear function having monotoneous increasing attendency.

Each of the connecting weights and the biasing values between the input layer and the intermediate layer, and between the output layer and the intermediate layer is independent each other.

In the structure of such neural network system, when there are provided input patterns, i.e. output vectors $(I_1, I_2, I_3, I_4$ and $I_5)$ to be fed from each of the units contained in the input layer), each of the errors which is respective difference from each of the desired outputs from the output layer to each of the measured outputs is estimated, and each of the connection weights is corrected so that the sum-square value of the errors should be minimized. Such training or learning of the connection weights can improve the performance of the system. The BF method will estimate the correction coefficient of the weights, and the correction coefficient can be used to improve the training or the learning for producing efficiently convergence value. There have been proposed several method for such producing the convergence.

There have been proposed a joint transform method, a matched filter for optical phase relation to gain an optical correlation output signals, and a joint transform method using a lens array, and however, any proposed methods utilized a spatial light modulator or a photography film as a display device for display the pattern to be reviewed and each of the reference patterns.

The neural network into which the values in response to the correlation optically produced provides that the light intensities of the correlation output resulting from each of the reference patterns and a pattern to be reviewed which are respectively presented or impressed on a display at a certain time T1 are somehow different from the light intensities of the correlation resulting from the patterns which are displayed on the same display at the different time T2. This has been known, and is due to that the beam of the transmission on the reflection obtained by transmission through the displayed patterns or by reflection to the displayed patterns presented on the display would be shifted or fluctuated, and further that there is found shift or fluctuation of the beam by speckle noise.

When a defective or imperfect pattern to be reviewed is represented, the resulting respective light intensity of the correlation output in regard to each of the reference patterns will be lower than the intensity of the correlation output gained when a perfect pattern is represented.

Therefore, the input pattern to be fed to the neural network system will be entirely different each from other when a perfect pattern is presented, and when a defective pattern is presented to be reviewed. Therefore, the system which has been trained for supervised learning when a perfect pattern is presented will provide error recognition from the correlation output when an imperfect pattern is presented.

Then, if the system has been modified to accept an imperfect pattern for training of learning, it has to be trained for both cases where a perfect pattern is presented and where an imperfect pattern is presented, and therefore, it takes more time-consuming to make the system learning.

When the composition of the neural network is fixed, the number of the categories to which the perfect pattern to be reviewed should be classified will be fixed. When one desires to make the system learning to recognize even an imperfect pattern to be reviewed, and to classify an imperfect pattern to be reviewed, the number of the categories will be decreased rather than the number of the categories which can be recognized, and therefore, the ability or performance of the system will be degraded and decreased.

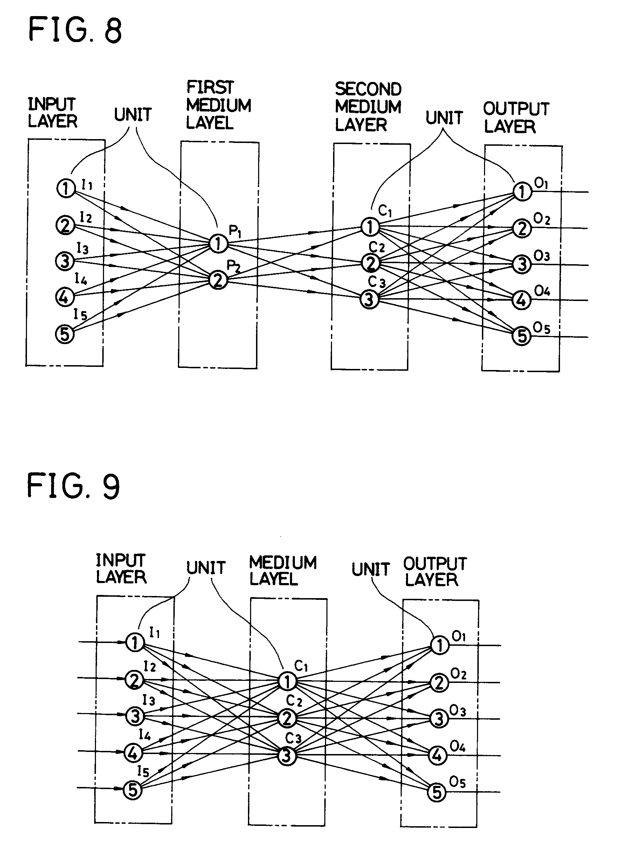

FIG. 9 shows a typical structure of a prior art neural network. In the neural network with supervised learning by a BP method, there are the group of the units having layered structure with three or more layers, including an input layer to which pattern signals are fed, a output layer from which recognition output signals are discharged or output, and a intermediate or hidden layer. In FIG. 9, the number of the intermediate layer is one, and the number of the units contained in the input layer is five, and the number of the units contained in the intermediate layer is three, and the number of the units contained in the output layer is five. Those numbers are only for illustration, and can be selected on the basis of the requirement.

The respective output values $I_i$ wherein i is the unit number, fed from each unit in the input layers are transmitted to each of the units in the intermediate layer, and the respective output values $C_i$ wherein "i" is the unit number, from each of the unit in the intermediate layer are transmitted to each of the units in the output layer to provide the respective output values $O_i$ wherein i is the unit number to be output from each of the units in the output layer. In FIG. 9, the outputs from the input layer and from the intermediate layer are connected to a plurality of the units, and then there seems a plurality of outputs. But, the output from one unit has plurality of connections, but one unit has only one output value. There is no connection between the units in the same layer. Further, there is no feed-back from the layer near to the output layer to the layer near to the input layer. (There is no feed-back in reverse direction.)

In FIG. 9, the connection between each of the layers is denoted by an arrow, and there are provided the connection weight values $V_{ij}$ wherein the suffix of the the connection weight value denotes the respective unit number of the corresponding units which are to be connected each other, ( wherein i is the unit number of the intermediate layer, and j is the unit number of the intermediate layer), to connect respectively the units of the input layer to the units of the intermediate layer, and further the connection weight values $W_{ij}$ wherein i is the unit number of the output layer, and j is the unit number of the intermediate layer, to connect respectively the units of the intermediate layer to the units of the output layer. For example, the connecting weight from a unit 1 of the input layer to a unit 1 of the intermediate layer is denoted by $V_{11}$. Further, the connecting weight from a unit 3 of the intermediate layer to a unit 5 of the output layer is denoted by $W_{53}$.

The character or performance of the intermediate layer and the output layer are represented by the following formula;

3

$$C_i = f(\Sigma_j V_{ij} C_i + \xi_i) \quad (21)$$
$$O_i = f(\Sigma_j W_{ij} C_i + \theta_i) \quad (22)$$
$$f(X) = 1/[1 + \exp(-X)] \quad (23)$$

wherein i and j denote the numbering of the corresponding units, and $\xi$ and $\theta$ are biasing values for each of the units. The function as shown in the equation (23) is so called sigmoidal nonlinear function. These biasing values can represent each of connecting weights when a dummy unit having output 1 is provided respectively to each of the layers, and the respective output from the dummy unit will connect to each of the units of the adjacent layer with connecting weight value $\xi_i$ or $\theta_i$. Then, the system can learn to determine each of the biasing values similarly to the learning of the other connecting weight.

In the neural network system, when a certain input pattern, that is, a output vector $(I_1, I_2, I_3, I_4, I_5)$ is given, the desired output from the output layer is compared to the actually measured output $O_i$, wherein i =1, 2, 3, 4 and 5, and the sum-square of the error differences of the respective units is estimated, and the respective weight values between the units are corrected so that the estimated sum-square should be minimized. Accordingly, the system which can give the desired output pattern can be obtained.

The BP method is one of the calculation method of such correction of the weight values ( or producing the correction coefficient). This is so called, "generalized $\delta$ -rule". Further, the correction coefficient can be used for efficient training of the system, and there are some proposals for obtaining actually correction values by using the correction coefficient.

A set of the input patterns to be recognized can automatically determine the network weights in response to the features of the respective patterns, so as to gain a recognition network, thereby providing flexible processing for recognition. The number of the connections to connect each other the layer units will be significance of the system. In the above mentioned structure, where the number of the categories to be recognized is N, the necessary number of the units in the intermediate layer should be larger than $\log_2 N$. This necessary number of the units in the intermediate layer is enough, where the characters of the respective categories are clear and definite. When the input pattern(s) are complicated so that the necessary number of the units in the intermediate layer becomes larger and the number of the units in the input layer is larger, the number of the connections between the input layer and the intermediate layer will be larger, and then, the practical apparatus may be in larger size.

## Summary of the Invention

Accordingly, It is an object of the present invention to provide an neural network system which can be composed of relatively low number of the connections, even when the input patterns are complicated, and even when the number of the recognition categories is greater.

It is another object of the present invention to provide an neural network system with high performance of pattern recognition, even when the pattern to be reviewed is imperfect or defective.

It is still another object of the present invention to provide an neural network system which can be trained with relatively short learning time and wherein the number of the categories to which the pattern is to be classified is not decreased.

It is further another object of the present invention to provide an improved neural network system which can effectively and efficiently proceed pattern recognition even when the light intensities of the correlation output are fluctuated because of the fluctuation of the transmission or reflection beam or because of the speckle noise.

## BRIEF DESCRIPTION OF THE DRAWINGS

The objects and features of the present invention will become more apparent from the consideration of the following detailed description taken in conjunction with the accompanying drawings in which:

FIG. 1 slows schematically an optical configuration of the device to be used in the preparative processing for the optical neural network system of the present invention.

FIG. 2 shows schematically the configuration of a prior art neural network system.

FIG. 3 shows a schematic view of reference patterns and patten to be reviewed, as displayed at a display plane of the optical correlation system in accordance with the present invention.

FIG. 4 is a schematic illustration showing a correlation output resulting from an optical correlator of the pattern to be reviewed and the respective reference pattern as shown in FIG. 3.

FIG. 5 shows schematically the distribution of the intensity of the correlation output, as obtained in an optical correlator.

FIG. 6 shows schematically the configuration of the optical correlator as obtained by using a matched-filter

4

in the inventive neural network system.

FIG. 7 shows schematically the structure of the optical correlation of the pattern to be reviewed and the respective reference pattern, as produced by using an incoherent beam, and Fourier transformation lenses arranged in array.

FIG. 8 slows a schematic illustration of one of the optical neural network system of the present invention.

FIG. 9 shows a schematic illustration of the typical convention one of the optical neural network system.

FIG. 10 shows schematically the configuration and function of one of the hoptically implemented neural network system of the present invention.

FIG. 11 shows schematically the function of the other type of the optically implemented neural network system of the present invention.

FIG. 12 shows schematically the function of the further type of the optically implemented neural network system of the present invention.

FIG. 13 shows a schematic illustration of the location of the patterns as written in the spatial light modulator used in the inventive neural network system.

Detailed Description of Preferred Embodiments

In accordance with the present invention, even when there is fluctuation of the values in response to the light intensities of the correlation outputs because the beam of the transmission or the reflection from the display for indicating optical patterns, there will be provided less change of the input patterns to be fed into the neural network system, including a pattern to be reviewed and imperfect patterns to be reviewed by calculation of normalization of the respective values in response to the light intensities of the correlation output respectively with the values in correspondence to the number of the image elements constituting a pattern to be reviewed , or a pattern to be reviewed and one or more reference patterns. Further, the number of categories to which a pattern to be reviewed is to be recognized and classified, and the performance of recognition and classification of imperfect pattern to be reviewed may be improved . It is not necessary to train additional learning about imperfect pattern(s) to be reviewed and the time period of training therefor may be shorter, and the recognition of imperfect pattern(s) to be reviewed may be easily and efficiently proceeded.

In accordance with the present invention, the outputs from each unit in the first intermediate layer are the values in correspondence to the correlation to correlate the input pattern with a connection patterns from the units in the input layer to be fed to the units, and the values are analogic. When the input patterns are expressed by the combination thereof with each of the outputs from each of the units in the intermediate layer, and the output of the given unit has a dynamic range of A:1, and the number of the units in the first intermediate layer is B, the combination of the units from each of the units in the intermediate layer can enable to recognize $A^B$ of the input patterns.

Therefore, the weight values for the connections from the first intermediate layer units to the intermediate layer nearer to the output layer units, and from the units of the intermediate layer nearer to the output layer, to the units of the output layer should be determined by assuming that the first intermediate layer is a new input layer for training in learning the weight pattern for the connections. Then, the input patterns are fed and presented to gain a pattern recognition.

Let the lowest necessary number of the connections be for easy pattern recognition is $W_{n\ min}$. Where the number of the layers in the system is 4, the number of the second intermediate layers other than the first intermediate layer is similar to that of the conventional system, and therefore, such number is expressed by the following equation.

$$W_{n\ min.} = In \times C_{1n} + C_{1n} \times C_{2n} + C_{2n} \times O_n$$
$$= I \times INT(Log_A N) + INT(Log_2 N) + INT(Log_2 N) \times N \qquad (24)$$

wherein one recognition category shall be applied to one unit of the output layer. $C_1$ and $C_2$ represent respectively the first and second intermediate layers, and the affix n denotes the number of the units in each of the layers. The other symbols are the same to those of the foregoings.

In the conventional structure comprising three layers, the number of the connections is as follows;
$$W_{n\ min.} = In \times C_{1n} + C_{1nx} O_n = I_n \times INT(Log_2 N) \times N \qquad (25)$$
wherein the function INT(x) denotes an integer nearest to x and larger than x.

For example, when the number of the recognition categories N =5, and the number of the units contained in the input layer: In = 8, and the dynamic range of the units contained in the first intermediate layer: A = 10, the both of $W_{n\ min.}$ are the same number: 26. However, when N = 100, In = 10000, and A = 10, the number of the connections requires 60,600 in the convention method, but 20,212 connections is sufficient in the inventive network system. Such difference in the necessary number of the connections will be raised when the number of the units contained in the input layer, and the number of the recognition categories are larger. Therefore, when the pattern to be reviewed is an image pattern, the necessary size of the network system would make greater difference.

The connection patterns to connect the units contained in the input layer to the units contained in the first intermediate layer can be optionally determined. But when several such connection patterns are selected from the input patterns to be classified to use as the connection patterns, the selected patterns will be near or close to the reference patterns, and then, the contrast between the cross-correlation outputs of input patterns and connection patterns can be higher. Then, the effective output dynamic range of the units of the first intermediate layer can be larger.

In a common neural network system, when each of the patterns is regarded as a vector, the cross-correlation is corresponding to an inner production of a vector of an input pattern and a vector of a connecting pattern. The output of the cross-correlation can be considered as a output of the cross-correlation peak, and the cross-correlation peak can be obtained by optically calculated correlation. The correlation values including the peak can be detected or sensed by using an optical correlation technique on the basis of an analogy of the patterns formed at a Fourier transformation plane, e.g. a joint Fourier transformation method and a matched filter technique.

The receptive area only to which the correlation output should be detected has been fixed. When such area is fixed only to the small range around the position of the correlation peak, the detected values will be the output in response to the correlation peak. When such area is a limited range in response to the optical correlation output pattern, the correlation peak as well as the output other than the peak can be detected. Especially when the output other than the peak is detected, it can be assumed that the portional pattern analogy can be estimated constituting the pattern. Accordingly, the peak output and the output resulting from the intensities other than the peal in response to the correlation can be utilized as a output coming from the respective units of the first intermediate layer to gain more information therefrom.

The ordinary calculation of inner product will provide different results depending the overlapping position of the input pattern and the reference patterns. However, in the above described method, the resulting correlation outputs may be considered to be a shift-invariant, and then, the recognition may not be influenced by the position shift of the input pattern. In this case, the calculation of the first term in the formula (24) including greatest number of the connections when the input pattern is complicated can be proceeded by an optical device, and therefore, the size of the network can be significantly reduced, and further the rate of the recognition can be highly improved.

The detection of the correlations on the basis of joint transform method is simultaneously proceeded in parallel on the connection weight patterns in the system, i.e. on a plurality of reference patterns, by using a spatial light modulator and an array of lenses, and then, the rate of processing in the network system may be significantly improved.

The present invention is further illustrated by the following examples to show an artificial neural network pattern recognition system, but should not be interpreted for the limitation of the invention.

EXAMPLE 1

FIG. 1 slows schematically one preferred embodiment of the inventive neural network system, in an optical arrangement view.

The neural network system optical arrangement view of FIG. 1 is provided for pre-processing of ordinary neural network system, which has an optical device to gain a correlation between patterns.

The optical apparatus as shown in FIG. 1 comprises a pattern output means 1, an optical Fourier transform means, a pattern output means 3, an optical Fourier transform means 4 and an optical detecting means 5.

The one pattern to be reviewed and each of the reference patterns as represented at the display assembly 16 are read out upon the coherent beam emitted from the laser source 11, the beam 12 transmitting through the display 16 enters into the beam splitter 15 so as to separate the beam into the two beams 17 and 18. The beam 18 is projected through a Fourier transform lens 21 to a screen 31 so as to represent a jointed Fourier transform patterns thereon.

The joint Fourier transformation pattern is read by a two-dimensional image sensor 32, and is displayed on a electric addressing type liquid crystal light valve 35, through an image processing and liquid crystal drive circuit 32, and then the displayed pattern is read by a beam 37, and Fourier-transformed through a Fourier transformation lens 41, to form the correlation output light intensity pattern on a screen 42. Further, the displayed intensity pattern is sensed by a two-dimensional image sensor 43, and memorized in a computer 51.

The light intensities from a pattern to be reviewed and each of the reference patterns formed on a screen 53 are read or sensed by a two-dimensional image sensor 52 at the similar timing to that of the two-dimensional transducer 52, and memorized in a computer 51. Here, each of the correlation output light intensities estimated from each combination of the pattern to be reviewed and the respective reference pattern, which has been stored in a computer 51, and the respective light intensity from the beam formed by reflection or transmission to or through the pattern to be reviewed and each of the reference patterns as impressed, by the beam 17 are stored in a computer 51. Further, the computer 51 stores the values in response to the obtained light intensities, for example, the representation of the patterns by 256 grades using 8 bit memory, and the data in term of linear light intensity obtained such as by a photo detector.

Next, the method for determining the light intensity of these correlation outputs so as to produce or obtain the correlation of the pattern to be reviewed and the respective reference pattern is explained as follows.

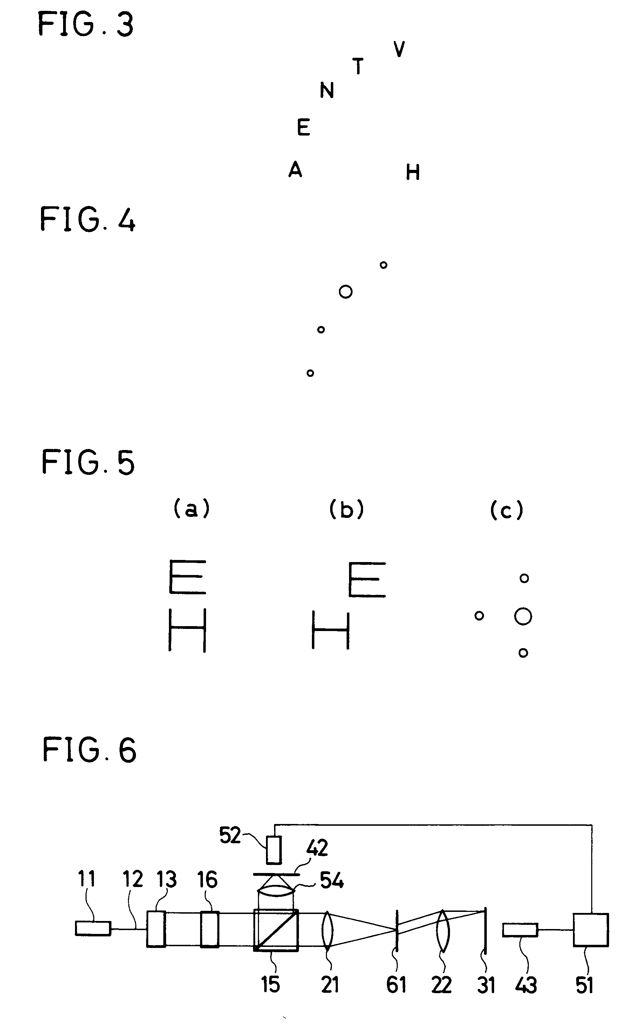

For example, the group of the reference patterns comprises five letters; "A", "E", "N", "T" and "V", and the pattern to be reviewed is "H". As shown in FIG. 3, the five letters are arranged conically or along to a circle of the center at which the letter "H" is located, on a display 16. In this case, the output of the two-dimensional image sensor 43, i.e. the correlation output formed from the letter pattern "H" and each of the reference pattern (five letters) can be presented or impressed respectively at the position of the corresponding reference patterns, as arranged on the display 16, and as shown in FIG. 4, can be sensed as a light intensity of the respective correlation output. When the peak value of the light intensities of the correlation output is higher, the spot presented will be larger. In this explanation, the group of the reference patterns includes only A, E, N, T and V, but this is only for simple illustration, and then, the reference patterns and the number of the reference patterns is not limited to these.

Further, the peak value of the light intensities of the correlation output as obtained is stored in a computer 51 too.

The auto-correlation to be presented near the optical axis is not shown in FIG. 4.

The correlation output of the two patterns A(x,y) and B(x,y) is represented by the following equation;

$$I(x',y') = \iint A(x,y)B^*(x'-x,y'-y)dxdy \quad (1)$$

wherein * denotes complex conjugated.

Apparent from the equation (1), the correlation output distribution has the width of two times of the respective pattern, and therefore, the whole light power from the receiving range corresponding to the width or the range of the correlation output can be used as data or information to represent the correlation of the patterns, and also the average of the light power from the receiving range can be used for the same purpose.

FIG. 5 shows schematically how the light output of the correlation is distributed, in which two patterns are shifted in their positions, in a vertical direction of the drawings. When the pattern "E" is positioned perfectly in parallel along with the position of the pattern "H" as shown in FIG. 5 (a), the peak value of the correlation is formed. When the patterns "E" and "H" are shifted to the length of the size of the pattern, as shown in FIG. 5 (b) so that the one the vertical bar of "H" is overlapped in parallel position, the light intensities of the correlation is lower than the peak value. FIG. 5 (c) shows the distribution of the light intensities of the correlation formed from the patterns "E" and "H", and the central larger circle indicates the intensity of the peak value, and the smaller circles at the upper and lower position apart from the central circle indicate the response of the traverse bars, and the smaller circle traversely apart from the central circle indicates the response of the vertical bars. Therefore, the whole light power or the average light power would indicate the characters or information of each of the patterns, which is not suggested by the peak value.

Therefore, when the light intensities of the correlation output are detected or sensed by using a two-dimensional image sensor, the beam at only the range in which the peak of the light intensities of the correlation output exceeds a certain maximum received light intensity of the image sensor is received, so that the light intensities of the correlation output wherein the intensities are weak is emphasized, and as a result, the characters which the peak light quantity does not suggest can be emphasized, and the good information in response to each of the patterns can be obtained.

Next, each of the light intensities of the respective correlation output resulting from the pattern to be reviewed and each of the reference patterns which are stored in a computer 51 is normalized by each of the light intensities formed by irradiation of the beam 17 from the pattern to be reviewed and each of the reference patterns with a computer 51, and the respective normalization is input into each of the units contained in the input layer of the neural network system. The normalization method will be explained.

The method of normalization can be carried out by two normalization methods; normalization "a" method and normalization "b" method. The normalization "a" method comprises normalization of the respective light intensities of the correlation output respectively resulting from the pattern to be reviewed and each of the reference patterns with the light intensity formed from the pattern to be reviewed, by irradiation of the beam 17.

The normalization "b" method is by normalization of the respective light intensities of the correlation output respectively resulting from the pattern to be reviewed and each of the reference patterns with the sum of the values in response respectively to the light intensity of the transmission or the reflection formed from the pattern to be reviewed and one or more reference patterns. The normalization "a" method is significantly useful when an imperfect pattern must be input into the system, and further when the beam obtained by transmission or reflection is flickered or the intensity of the beam is shifted.

The respective light intensity of the correlation outputs resulting from the perfect or imperfect pattern "H" to be reviewed and each of the reference patterns "A", "E", "N", "T" and "V" may be presented respectively be I(ha), I(he), I(hn), I(ht) and I(hv), and further the intensity from the perfect or imperfect pattern "H" to be reviewed may be denoted by I(h).

There have been that the light intensity of the correlation output I(ha), I(he), I(hn), I(ht) and I(hv) is input or entered as it is into the system, so as to execute a supervised learning for pattern recognition.

However, in an ordinary case, the light intensity of the correlation output obtained from an imperfect pattern to be reviewed is somehow lower than the light intensity from the perfect pattern, depending to the degree of imperfection. Therefore, it takes more learning time when the lower light intensity of the correlation output is put in into the system among the training data set.

In the fixed numbers of the units of the system, the number of the categories to which a perfect pattern should be classified is fixed. Therefore, the system should be trained to recognize an imperfect pattern with a certain learning method, so that the imperfect pattern can be recognized, and classified to a certain class. Then, the number of the categories is reduced to the lower number than that of the categories to which only the perfect pattern can be classified, and therefore, the performance of the system will be decreased.

In the inventive neural network system, the respective normalized value $I_1(h)$ obtained by the normalization (a) method is fed into the respective unit of the input layer. The normalization method (a) will normalize each of the light intensities of the transparent beam or reflected beam resulting from the correlation between the pattern to be reviewed and each of the reference pattern. Further, the supervised learning and the recognition of the patterns can be effectively carried out by the inventive neural network system.

$$I_1(ha) = I(ha)/I(h) \quad (2)$$
$$I_1(he) = I(he)/I(h) \quad (3)$$
$$I_1(hh) = I(hh)/I(h) \quad (4)$$
$$I_1(ht) = I(ht)/I(h) \quad (5)$$
$$I_1(hv) = I(hv)/I(h) \quad (6)$$

The values $I_1()$ obtained by the normalization using the equations (2), (3), (4), (5) and (6) are fed to the system, so that the pattern can be effectively and efficiently recognized or classified even when the pattern to be reviewed is imperfect, or even when the beam obtained from the transmission or the reflection is swayed or shifted, so that the resulting light intensity of the correlation output is insufficient, and shifted.

For example, the light intensity of the correlation output resulting from an imperfect pattern "H" to be reviewed and each of the reference patterns "A" is In(ha), and the light intensity of the transmission or the reflection resulting from the perfect pattern "H" is In(h).

Further, assuming that the light intensity of the correlation output resulting from an imperfect pattern "H" to be reviewed and the reference pattern "A" is In(ha) $-\Delta$ In(ha), the light intensity of the transmission or reflection resulting from the imperfect pattern "H" to be reviewed is In(h) $-\Delta$ In(h), similarly to those in the normalization "a" method.

The light intensities of the transmission or the reflection resulting from an imperfect reference pattern of "H" is In(h) $-\Delta$ In(h).

Therefore, the intensities of the correlation output resulting from when the pattern to be reviewed is imperfect H.

$$In(ha) - \Delta In(ha) \quad (7)$$

Further, the intensities of the transmission or the reflection from the pattern "H" to be reviewed, resulting when the pattern to be reviewed is imperfect H.

$$In(h) - \Delta In(h) \quad (8)$$

The normalization of each of the light intensities can be carried out using the formulae (7) and (8) as follows;

$$[In(ha) - \Delta In(ha)]/[In(h) - \Delta In(h)] =$$
$$\{In(ha) - \Delta In(ha)\} * \{1/In(h)\}/[1 - \{\Delta In(h)/In(h)\}] \quad (9)$$

wherein

$$In(h) > \Delta In(h) \quad (10)$$

Therefore, the relation of those equations are always established even when any imperfect or defective pattern is fed.

Accordingly, the difference in the normalized correlation outputs between an imperfect pattern and a perfect pattern is always smaller than the difference in the not normalized outputs. Therefore, the normalization method will increase significantly the recognition probability in that the imperfect pattern and the perfect pattern could be recognized in the same category.

The period time for the system to be trained for recognition of an imperfect pattern is decreased because it is not necessary to train all of the imperfect pattern to be reviewed. Then, the recognition of an imperfect pattern can be readily and efficiently proceeded.

The above explanation is applicable to the other pattern to be reviewed and the other reference patterns.

Next, the normalization "b" method will be illustrated. The normalization "b" method is significantly useful when an imperfect or detective pattern to be reviewed is recognized by the system, and also when the beam of the transmission or the reflection from the pattern to be reviewed and each of the reference patterns is swayed or shifted in its intensity.

For the illustration of the normalization "b" method, it is provided similarly to those for the "a" method that the pattern to be reviewed is "H", the reference patterns are "A", "E", "N", "T" and "V", and then, the respective light intensity of the correlation outputs resulting from the perfect or imperfect pattern "H" to be reviewed and each of the reference patterns "A", "E", "N", "T" and "V" may be presented respectively be I(ha), I(he), I(hn), I(ht) and I(hv), and can be sensed by a two-dimensional image sensor. Further the light power of the transmission or the reflection from the perfect pattern "H" to be reviewed may be denoted by I( h).

In the "b" method, each of the light power of the transmission or the reflection resulting from the reference patterns "A", "E", "N", "T" and "V" : respectively denoted by Ir(a), Ir(e), Ir(n), Ir(t) and Ir(v) is sensed by a two-dimensional image sensor 52, in addition of the measurement of the pattern to be reviewed, and the resulting respective light power is stored in a computer 51.

Each value obtained by the optical correlations is normalized by the following equation in accordance with the above normalization method, and the resulting normalization $I_2(\ )$ is respectively fed into each unit of the input layer in the system, in use for supervised learning and the pattern recognition processing.

$$I_2(ha) = I(ha)/\{I(h) + Ir(a)\} \quad (14)$$
$$I_2(he) = I(he)/\{I(h) + Ir(e)\} \quad (15)$$
$$I_2(hn) = I(hn)/\{I(h) + Ir(n)\} \quad (16)$$
$$I_2(ht) = I(ht)/\{I(h) + Ir(t)\} \quad (17)$$
$$I_2(hv) = I(hv)/\{I(h) + Ir(v)\} \quad (18)$$

Next, it will be explained why the normalization by using the above equations is significantly useful and effective when the beam intensities of the transmission or the reflection from the pattern to reviewed and the reference patterns are shifted, and when an imperfect pattern is used to input into the system. Herein, for simplification of the explanation, only one pattern to be reviewed and one reference pattern are used to obtain the correlation output, but more patterns can be processed in the system.

In the following explanation of the normalization b method, the light intensity of the correlation output resulting from a perfect pattern "H" to be reviewed and the reference pattern "A" is In(ha), the light intensity of the transmission or reflection resulting from the perfect pattern "H" to be reviewed is In( h), similarly to those in the normalization "a" method. Further, the light intensity of the correlation output resulting from an imperfect pattern "H" to be reviewed and the reference pattern "A" is In(ha) - $\Delta$ In(ha), the light power of the transmission or reflection resulting from the imperfect pattern "H" to be reviewed is In( h) - $\Delta$ In(h), similarly to those in the normalization "a" method.

In the normalization b method, the shift of the transmission or the reflection by the reference pattern is considered, and the average of the light power of the transmission or the reflection resulting from the perfect reference pattern "A" is Iy(a), and the average of that from the imperfect reference pattern "A" is Iy(a) - $\Delta$ Iy(a).

The standard value of the light power of the transmission or the reflection resulting from the reference pattern "A" may be the average value Iy(a), but this is only for the explanation of the method. However, the standard can be the other value.

$$[In(ha) - \Delta In(ha)]/[\{In(h) - \Delta In(h)\} + \{Iy(a) - \Delta Iy(a)\}] =$$
$$[In(ha) - \Delta In(ha)]*[1/\{In(h) + Iy(a)\}]/$$
$$[1 - \{\Delta In(h) + \Delta Iy(a)\}/\{In(h) + Iy(a)\}] \quad (19)$$

In this equation, $\Delta$ In(h) + $\Delta$ Iy(a) < In(h) + Iy(a), and then, even when the transmission light or reflection light from the reference patterns is fluctuated, the equation (19) will remove the change or shift thereby.

$$[In(ha) - \Delta In(ha)]*[1/\{In(h) + Iy(a)\}]*$$
$$[1 + \{\Delta In(h) + \Delta Iy(a)\}/\{In(h) + Iy(a)\}] \quad (20)$$

It is apparent from the formula (20) that even if the light intensities of the transmission or the reflection by the reference pattern are shifted, e.g. when the Iy(a) is increased, i.e. $\Delta$ Iy(a) is positive, the term of [In(ha) - $\Delta$ In(ha)] is decreased, e. g. when the Iy(a) is decreased, i.e. $\Delta$ Iy(a) is negative, the term of [In(ha) - $\Delta$ In(ha)] is increased, and therefore, in any cases, the whole value of the formula (20) is not so shifted.

The result from processing of an imperfect or defective pattern to be reviewed has been explained in the paragraphs explaining the normalization "a" method. Further, the significant result in the processing by the normalization with the sum of the transmission or the reflection can be similarly found when the other pattern to be reviewed and the other reference patterns are imperfect or defective.

The sensing of the light power of the correlation output and the normalization of the light power of the correlation output have been explained in regard to how to do. Those intensities can be sensed by the other method, and any combination of methods, so as to be fed into the neural network. The inventive system is significant in good efficiency for supervised learning, and high performance to recognize patterns, especially when the patterns are imperfect or defective, and when the power or the beam to be sensed might be fluctuated.

[EXAMPLE 2]

This example illustrates an artificial neural network pattern recognition system using a filter on the basis of a Fourier transform hologram as a device for processing of optical correlation. This is an example of the system using a matched filtering optical correlator.

FIG. 6 illustrates am optical structure to be used for the inventive processing assembly system, using a conventional matched filter 61. The matched filter consists of multiple hologram of the interference fringe pattern obtained by optically Fourier transformed, a plurality of the reference patterns, and plane reference waves each of which has projection angles depending on each of the reference patterns.

In the neural network system shown in FIG. 6, the beam 12 emitting from a laser source 11 passes through a beam expander 13, so as to expand the diameter of the beam to a proper diameter, and projecting on a pattern to be reviewed, which has been displayed on a display 16.

The beam having a complex amplitude distribution of the pattern enters into the beam splitter 15 to separate into a transmission beam and a reflection beam. The transmission beam is Fourier transformed by a Fourier transformation lens 21 and incident to a multiple interference fringes on a matched filter 61, to which the beam is projected.

The diffraction beam emits toward the direction of a reference plane wave used for making hologram of reference patterns having the same Fourier transformed pattern elements as those of the pattern to be reviewed and classified, in the preparation of the multiple matched filter.

This diffraction beam is focused on a screen 31 by a focusing lens 22. The one diffraction beam will form a cross-correlation pattern between the pattern to be reviewed and the reference patterns, and the other diffraction beam will form a comvolution. Therefore, the position at which each of the reference patterns is presented or impressed is readily known, and the peak value or the whole light power in the range of the correlation output pattern can be measured, and stored in a memory of a computer 51.

The reflection beam obtained by a beam splitter 15 is focused by a lens 54 to form an image in response to the complex amplitude distribution of the pattern to be reviewed.

The light intensities formed on a screen 42 in response to the pattern to be reviewed are sensed by a two-dimensional image sensor 52 in a timing similar to that of the sensor 43, and stored in a memory of the computer 51.

The respective value stored in the computer 51 is normalized as mentioned in Example by the computer 51, and the normalization values are respectively fed into each of the input layer of the neural network.

Each of the light intensities of the transmission or the reflection in response to each of the reference patterns can not be sensed in the Example 2, and therefore, the normalization "b" method can not be carried out in this Example.

The matched filter does not produce the cross-correlation output between reference patterns, and therefore, even several reference patterns are multiplied, and the contrast ratio in the correlation output does not lower so much. Then, the correlation outputs as well as the normalization values can have greater dynamic range, and therefore, the recognition efficiency can be enhanced in the recognition processing by the inventive system.

Further, the apparatus for joint Fourier transform can be used for the inventive system.

The inventive system can process parallelly and idependently a joint Fourier transformation of the pattern to be reviewed and each of the reference patterns. The intensity distribution of the beam of the transmission or the reflection resulting from each of the reference patterns and each of the patterns to be reviewed can be easily detected in a similar way to Example 1 by using a beam splitter to separate the beam having a complex amplitude distribution of the beam after passing through a display.

The light power of the correlation obtained by the optical system are normalized in a similar way to Examples 1 and 2 in accordance with the normalization "a" or "b" method, and fed into the neural net.

Examples 1 and 2 use a coherent beam, but the shift by the parallel movement of the inputs can be minimized or reduced.

## [EXAMPLE 3]

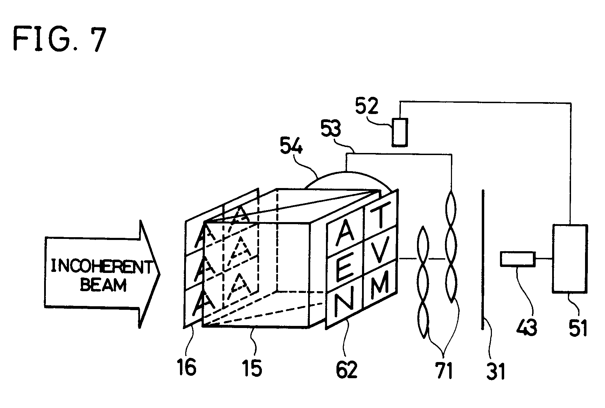

The other type of the neural network system of the present invention using the ordinary incoherent optical correlation apparatus can be assembled as shown FIG. 7.

In this optical assembly, an image display 16 and a mask for the reference patterns are arranged relatively closely, and the output of the product between a pattern displayed on the display 16 and each of the reference patterns is focused on a screen 31 by a focusing lens array 71. The output resulting from each of the reference patterns is sensed by a two-dimensional photo sensor 43 and stored in a memory of the computer 51.

In this Example, there is provided a beam splitter 15 between an image display 16 and a reference pattern mask 62 so as to reflect the beam passing through the display 16 by the splitter 15, and then, focused on a screen 53 by a lens 54 to form a light intensity pattern on the screen 53, which is sensed by a two-dimensional photo sensor 52 and stored in a memory of the computer 51.

In this Example, the patterns to be reviewed which are respectively to each component in the reference pattern mask 62 are arranged in array. The cross-correlation peak formed from each of the reference patterns and the respective patterns to be reviewed can be sensed by such apparatus. The resulting light intensities of the correlation outputs are normalized similarly to that of Examples 1 and 2, in accordance with the normalization "a" method, by the light intensities of the patterns to be reviewed, and the normalized values are fed respectively to each of the units of the input layer of the system.

The allowance in regard to the parallel shift of the input pattern will be entirely zero in an optical phase relation, and the processing assembly system become in a simple structure, and further, it is easy to make integration of the device.

The beam of the transmission or the reflection of the optical correlation can be fluctuated in its intensity and its direction, and then the values in response to the light intensity of the correlation output can be shifted. However, the pattern to be reviewed can be recognized in such shifting of the beam, and further an imperfect or defective pattern can be recognized. Therefore, the system can be readily facilitated.

The supervised learning can be carried out even when the pattern to be reviewed is imperfect or defective without much decrease of the number of the categories to which the pattern should be classified, and further, it does not take so much to execute such learning.

## [EXAMPLE 4]

FIG. 8 shows schematically the structure of the neural network assembly of the present invention.

There are provided four layers; an input layer, a first intermediate layer, a second intermediate layer and a output layer having respectively five units, two units, three units and five units.

These numbers of the layers and the units are fixed only for explanation of the invention, but should not be used for the limitation of the structure of the inventive neural network system. In general, the BP method uses 1 or 2 intermediate layer(s), and the more number of the intermediate layers does not give significant improvement. In the inventive neural network system, the respective weight for the connection from the first intermediate layer to the output layer can be determined by learning method, and then, the number of the intermediate layer(s) other than the first intermediate layer may be one or two, and the whole number of the layers in the system is preferably four or five.

The number of the respective layer can be determined on the basis of the number of the (image) elements contained in the input pattern, the number of the categories for recognition and the dynamic range of the output of the units contained in the first intermediate layer.

Each of the terms to indicate the numbers of the units as set forth in Equations (24) and (25) will indicate the minimum necessary numbers of the units. Then, in practice it is necessary to provide more units depending the number of its training sets, and the degree of the orthogonality of the patterns.

The pattern SI entering into the input layer, in the inventive neural network system can be represented by the following equation

$$SI = (I_1, I_2, I_3, I_4, I_5)$$

The connection weight $V_i$ which is to be entered to the unit i of the first intermediate layer from the respective unit of the input layer can be represented by the following equation.

$$V_i = (V_{i1}, V_{i2}, V_{i3}, V_{i4}, V_{i5}) = (n \,|\, V_{in}) \quad (26)$$

wherein n denotes the unit number of the respective unit in the input layer.

The output $P_i$ from the i th unit contained in the first intermediate layer is represented by the following equation.

$$P_i = g(SI*V_i) \quad (27)$$

wherein * indicates an internal product, and the function g(x) is a monotonically non-decreasing function. Therefore, when the function of g(x) is a linear function, $P_i$ is proportional to the internal product of an input pattern vector and a weight pattern vector, i.e. the peak value of the cross-correlation between an input pattern and a weight pattern.

This function g(x) should not be strictly a linear function, e.g. there may be found saturation in the range where the value of x is entirely high, or entirely low, and dg(x)/dx may not be constant. The function g(x) should be monotoneous. Further, the function g(x) may be a function by which the value of x is converted to a discrete value.

The weight pattern vectors to connect from the units of the input layer to the units of the first intermediate layer can be selected to have a basically random pattern, but such pattern vectors are preferably patterns having spatial frequency components similar to these of the input pattern to be recognized. When the spatial frequency components of the input pattern are significantly different from these of the weight patterns, the cross-correlation, i.e. the outputs from the respective units in the first intermediate layer may be averaged, i.e. be uniform to any input patterns, and then, the comparative height in the output patterns from the units in the intermediate layer, resulting from the input patterns may be lowered.

Accordingly, the number same as the number of the units of the first intermediate layer, of the patterns to be fed into the first intermediate layer are selected from the input patterns and are used for correction weight patterns from the input layer to the first intermediate layer. Then, such connection weight patterns will have an appropriate spatial frequency components, and therefore might contain a pattern having greater correlation to one of the input patterns corresponding to the auto correlation. Therefore, it can be ensured that the output from the units in the first intermediate layer provides significant difference between input patterns to which the outputs are corresponding.

Herein, the element In of an input pattern SI wherein the suffix n is the unit numbering, may be analogic value, binary coded digitalized values (1 or 0), binary coded values (1 or -1), or ternary coded values (1, 0, -1), or quadranary or more multiplenary coded values. The weight pattern $V_1$ to connect the units of the input layer and the first intermediate layer is composed of the elements $V_{1n}$, which has the same configuration as in response to such input pattern. The function g(x) in the units of the first intermediate layer can be changed depending on the range in which each of the values can be positioned. However, the range of the output values may or may not contain a negative range, in the provision of satisfying the above described conditions. The connection weight between the units of the input layer and the units of the first intermediate layer, or the connection weight between the first intermediate layer and the second intermediate layer should be negative in many cases.

The resulting respective output from each unit of the first intermediate layer is fed into each unit of the second intermediate layer, and then, the network may be deemed an ordinary three layer structure comprising the first and second intermediate layers and the output layer. Therefore, the input patterns are presented contained in a training set of input patterns so as to obtain the outputs from each units of the first intermediate layer. Then, the resulting outputs from the first intermediate layer are combined with output supervising signals of the units of the output layer so as to make supervised learning of the connection weights between the second intermediate layer and the output layer, and further to make supervised learning of the biasing values.

It is noted that the supervised learning can be carried out on connecting weights to connect each unit in the second intermediate layer to each unit in the output layer, and on biasing values thereof, even when additional intermediate layer is added between the output layer and the second intermediate layers.

## [EXAMPLE 5]

The correlation calculating processing between the input layer and the first intermediate layer in the system can be easily implemented optically because it has a constant connecting weight between the units of each layers.

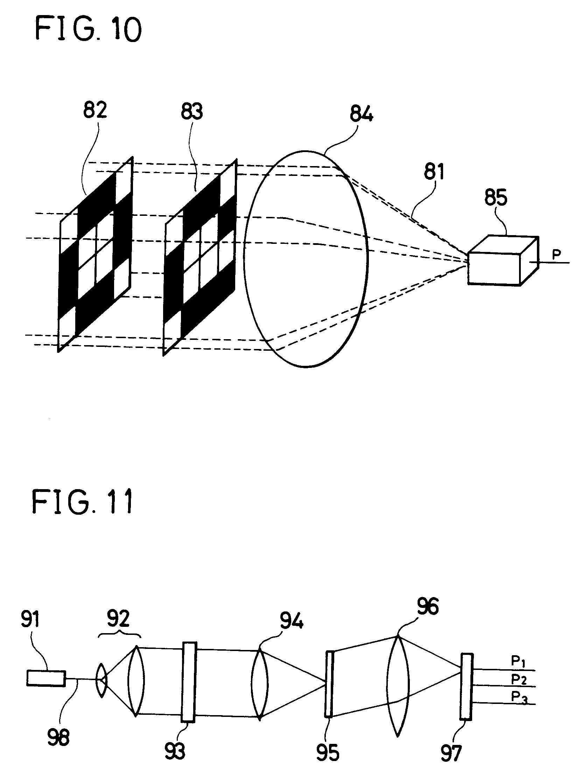

FIG. 10 shows schematically one embodiment of the optical arrangement for the inventive system.

The input pattern for the input layer is two-dimensionally arranged and displayed on a display of a spatial light modulator 82, such as a liquid crystal display, and the connection weights from the units of the input layer to the unit of the first intermediate layer are two-dimensionally arranged and also are presented on a spatial light modulator B 83. These spatial modulators may be close together, or are located in conjugated position each other with regard to an imaging lens. The beam 81 irradiates the surface of such modulators, and the transmission beam is focused by a focusing lens 84, and the intensities of the transmission beam are detected by a photo detector 85.

The output from the detector 85 can be the output Pi from each unit of the first intermediate layer, and when there are provided a plurality of the units of the first intermediate layer, the weight patterns respectively in accordance to each of the units are presented on the spatial modulator B 83, and each of the outputs from the detector 15 is applied to, and then, the outputs from each of the units can be obtained in sequence. Further, the connection weight patterns are fixed, and then, it is enough to provide array of fixed masks in parallel in correspondence to each of the units of the first intermediate layer. The number of the fixed masks is same as the number of the units. Further, the array of the spatial modulators is arranged in parallel to the masks, or alternatively the spatial light modulators with high resolution are used to present the multiple mask patterns in parallel.

In this case in which the masks are arranged in parallel, it is necessary to provide spatial light modulators A of the corresponding number in order to arrange the input patterns in the corresponding number. And, the detectors 85 are provided of the number same as the number of the units in array in order to obtain the plurality of the patterns formed by a focusing optical assembly. Alternatively, the multiple input patterns are formed each on the multiple masks by multiple imaging lenses.

Particularly, the number of the units in the input layer may be greater in the image patterns recognition, but the optical implement of processing with larger connections of large scale of the device can be proceeded in a high rate and in parallel.

[EXAMPLE 6]

FIG. 11 shows schematically one embodiment of optical arrangement wherein the optical correlation processing between the output patterns from the input layer and the connection weight patterns is carried out on the basis of analogy or similarity of a pattern on the optical Fourier transformation display.

The arrangement of FIG. 11 is assembled on the basis of the technique so called "matched filtering" in general. The beam 98 emitting from a laser source 91 is expanded to the beam having appropriate diameter, and fed into a light photo modulator 93 on which am input pattern is displayed. The beam 98 after modulated spatially in response to the input pattern passes through a Fourier transformation lens 94, and is applied on a matched filter 95 positioned at its Fourier transform plane. This matched filter 95 has been made on the basis of the reference patterns, i.e. a Fourier transform hologram resulting from the reference patterns or the connection weight patterns. When the Fourier transform pattern of a certain pattern in hologram has high correlation to the Fourier transform pattern of the input pattern in hologram recording, the resulting hologram will generate a conjugated beam with the reference beam used in the hologram recording, when the connection weight patterns are recorded in a direction of the reference beam.

If it is ensured that the reference beam is regarded as a plane wave, the further optical Fourier transformation of the resulting Fourier transformation will indicate the cross-correlation between the input pattern and the reference pattern, i.e. the square of the correlation in more correct term. Therefore, the beam 98 emitting from the matched filter 95 passes through a Fourier transformation lens 96, and incident to an array 37 of transducers so as to detect the correlation pattern.

The position of the center of the correlation pattern has been readily determined by the direction of the reference beam during the preparation of the matched filter, and therefore, the photo transducer shall be positioned at this portion of the reference beam passage. Further, The area of this light transducing element will adjust the detection range of the correlation power spectrum. Therefore, if the area is smaller, the result of the calculation will be near to the inner product of the patterns in an ordinary method. If the area is larger, the result of the calculation is less influenced by the deformation and/or the shift of the patterns.

The resulting output of the photo transducing element can be used as a output $P_i$ of the unit of the first intermediate layer, and the structure from the second intermediate layer to the output layer can compose the neural network system as described in Example 1.

A plurality of the reference patterns (i.e. the connection weight patterns) can be recorded in one matched filter by changing the direction of the reference beam, and these correlation patterns appear in the respective different position on the array 27 of the photo transducing elements, and then, the plurality of the outputs from the respective units in the first intermediate layer can be respectively put out in parallel. Therefore, the system can enable to process in a significantly high speed, and can be made in compact size.

There has been a joint Fourier transform method, as an optical calculation of the correlation on the basis of analogy of patterns formed on an optical Fourier transformation plane. This method has an advantages in that this method can be implemented by using a conventional spatial light modulator, and the joint transformation method as well as the matched filter method can execute the inventive neural network system. However, the joint transformation method is disadvantageours in ability of gaining the multiple correlation with the respective reference pattern in comparison with the matched filtering method. The inventors propose a multiple correlation detecting apparatus having array of plurality of detectors, and then, such detecting apparatus will be described in the next Example.

[EXAMPLE 7]

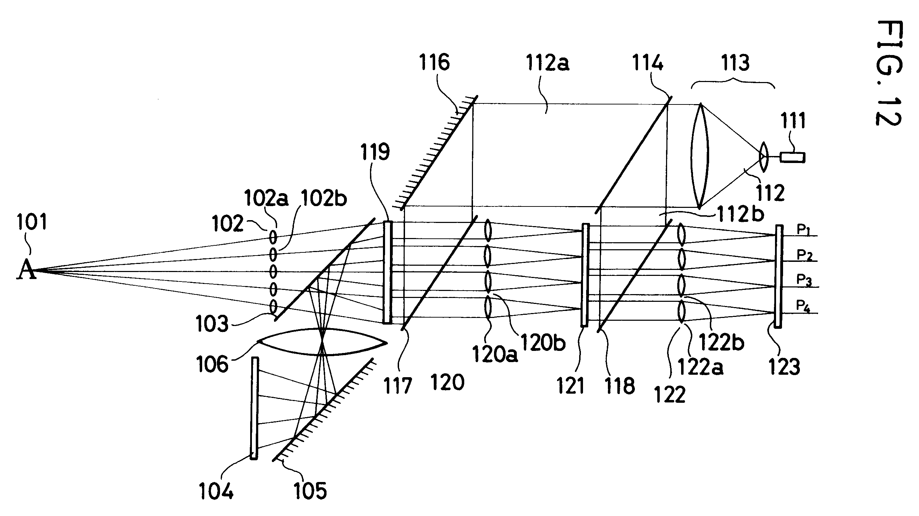

FIG. 12 shows schematically an optical system of the multiple correlation detecting apparatus.

The beam 112 emitting from a coherent light source is expanded by a beam expander 113 to an appropriate diameter of the beam, and further is separated into the two beam by a beam splitter 114. The beam 112a passing through the beam splitter 114 is reflected by a total reflecting mirror 116, and reflected by a beam splitter 117, and projected or incident to the read-out surface of a light addressing type spatial light modulator 119. The plurality of the patterns formed by imaging the input pattern 101 and the reference patterns 104 are written on the write-in surface (i.e. the addressing surface ) of the spatial light modulator 119. This writing optical system is composed of as follows.

The input pattern 101 is irradiated by an incoherent beam or a coherent beam, and each of the resulting images is focused or formed respectively by each of the lenses 102a, 102b, ... of by a lens array 102, on a write-in plane of a spatial light modulator 49. On the other hand, each of reference patterns from the reference pattern group 10 (connection weight patterns between the patterns) is displayed respectively by each of the lenses 102a, 102b, ... of by a lens array 102, at each position corresponding to each of the input pattern images on a write plane of the spatial light modulator 119, and is irradiated by an incoherent or coherent beam to obtain the images on a write plane of a spatial light modulator 119.

When the input pattern 101 and the group 104 of the reference patterns are exposed in parallel and simultaneously, a beam splitter 173 is used to produce each of the beams. FIG. 12 shows that a total reflecting mirror 105 is provided to bend the beam of the reference pattern forming optical arrangement.

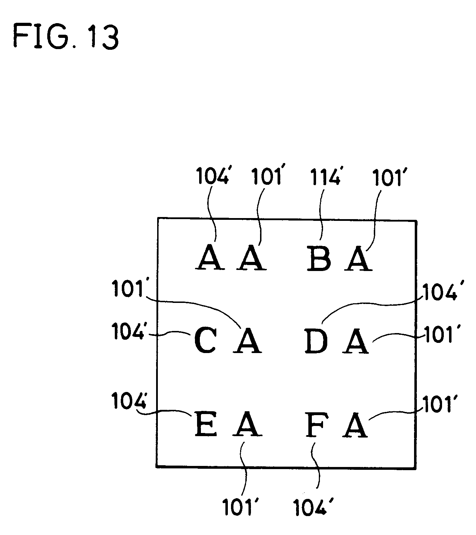

FIG. 13 shows schematically one embodiment of the pattern arrangement written in the spatial light modulator 119. Each of the reference patterns 104' and each of the input pattern 101' are arranged and displayed in pair on the spatial light modulator 119. Therefore, joint Fourier transform is proceeded on each pair to produce each of the correlations, and then, the correlation calculation processing of the input pattern and each of the reference patterns can be carried out at a time.

The distribution of the intensity reflectance or the distribution of the phase reflectance coefficient in response to the light intensities of the written patterns appears, or alternatively the both of them [which can refer to as the complex amplitude reflectance distribution in term of (intensity reflectance distibution) × (phase reflectance distribution)] appears ( are presented). Therefore, the beam 112 a incoming into the spatial light modulator 119, having the intensity distribution or the phase distribution or both of them in response to the written patterns outcome(s) from the spatial light modulator 119.

The read plane of the spatial light modulator 119 and the write-in plane of the spatial light modulator 121 are located respectively at the front focal plane and the back focal plane of the respective lens 120a, 120b, ... of the lens array 120, and the beam 112a passes through the respective lens 120a, 120b, ...of the lens array 120 which is respectively corresponding to each pair of the input pattern and the respective reference pattern, and form the respective power spectrum pattern in response to the pattern resulting from the respective pair of the input pattern and each of the reference patterns, i.e. the light intensity pattern of the Fourier transform intensity of the complex amplitude distribution in response to the pattern resulting from the respective pair of the input pattern and each of the reference patterns.

Accordingly, the complex amplitude reflectance distribution in response to the power spectrum pattern is respectively formed on the read plane of the spatial light modulator 121, and the beam 112b which has been reflected on a beam splitter 114 are further reflected on a beam splitter 118, and incident on the read-out plane of the spatial light modulator 121. Accordingly, the beam 112b emitting from the spatial light modulator 121 has the complex amplitude distribution in response to the respective spectrum pattern resulting from the respective pair of the input pattern and the respective reference pattern on the read plane of the spatial modulator 121, and passes respectively through lens 122a, 122b, ... of the lens array 122 to come to the receiving plane 123 of the detector.

The read-out plane of the spatial modulator 121 and the receiving plane 123 are positioned respectively on the front focal plane and the back focal plane of the respective lens 122a, 122b, ...of the lens array 122. Further, the respective lens 122a, 122b, ...of the lens array 122 is arranged respectively corresponding to each of the power spectrum patterns of the corresponding pair. The light intensity distribution formed on the receiving plane is respectively an intensity distribution of the complex amplitude distribution in response to each of the power spectrum resulting from each of the pairs, that is, a square pattern of the auto-correlation resulting from the respective pair of the input pattern with each of the reference patterns.

On the resulting square pattern of the auto-correlation resulting from the respective pair of the input pattern with each of the reference patterns, a square of the auto-correlation of the respective reference pattern and input pattern appear on each of the optical axis of the respective lens, and the respective square of the cross-correlation resulting respectively from the input pattern and each of the reference patterns appears on the respective position corresponding respectively to the position of the input pattern arid the respective reference pattern. Then, the position on which the input pattern and the respective reference pattern are to be located has been known, therefore, the correlation of the input pattern and the respective pattern can be detected by measuring the light intensities at the position at which the respective cross-correlation is presented on the detection plane 53.

The array of the respective lens used here can be made from an assembly of lenses if the necessary number of the lens is not large. However, if the optical device should be in compact, and the necessary number of the lenses is large, an array of plane microlenses having reflective index distribution, and an array of convex spherical lenses integrated on a substrate are available in the market, which can be used for this optical system.

Each of the spatial light modulators may be a spatial light modulator of optically addressing type. This type of the modulator may be in general using a combination of liquid crystal panel with photo-conductive layer, and the modulator using nematic liquid crystal is available from Hughes Aircraft Company in U.S.A. Further, the spatial light modulator using ferroelectric liquid crystal has been developed, and such modulator using ferroelectric liquid crystal can attain high resolution, and high contrast in a display. This is preferable for the inventive system.

The material having a photorefractive effect, such as BSO and $BaTiO_3$ can change the refractive index induced by the electric field 1 of photo-induced electron charge of the material depending on the intensities of the incident beam, and then, there is no need of providing a photoconductive layer. When the reading-out beam will erase wholly the information formed in the element of optical addressing type by the addressing beam, the wavelength range of the reading-out beam should be separated from that of the addressing beam in order to avoid the influence of the reading-out beam to the recorded information.

Especially, the BSO can be assembled to produce the modulator by which writing and reading can be proceeded in parallel, and at the same time, by using as an addressing (writing) beam a visible light having a longer wavelength which have rather than high sensitivity, and using as a reading-out beam an infra-red wavelength which has less writing sensitivity. Such spatial modulator may be of transparent type or of reflecting type. In general, the transparent type is more frequently used. In this case, the direction of the reading-out beam to be incident to the BSO should be changed.

The modulator including one using BSO and one using liquid crystal will modulate a light intensity by a combination of those material and polarizer, but the modulation of light phase can be carried out without any polarizer, and by selecting appropriately the polarization direction of the incident beam, and the direction of the respective optical axis of the respective device.

Where phase modulation should be carried out, the defraction efficiency can be improved with higher utilization efficiency and by giving appropriate phase difference, and therefore, the detection with higher sensitivity can be attained.

Further, the spatial modulator 121 can use combination of an image tube or image sensor such as CCD, and an electrically addressing type of spatial photo modulator.

Examples of the electric adressing type may be a liquid crystal panel as used in the above Example, and a ceramic element and crystal having a photoelectric effect, such as PLZT, KDP and BSO ($Bi_{12}SiO_{20}$) provided with matrix electrodes.

A detecting plane 123 may be array of photodiodes, image pickup tubes or image sensor device such as CCD (charge-coupled devices). Such detecting device array can detect the light intensities at the desired positions, i.e. at the positions at which the cross-correlation patterns resulting from the input pattern and each of the reference patterns are to appear, so as to gain the correlation outputs of the input pattern and each of the reference patterns.

The resulting output from the photo transducing elements can be used as a output $P_i$ from the respective unit of the first intermediate layer, and the structure from the second intermediate layer to the output layer can be composed as described in Example 1. The multiple cross-correlation detection system can employ the other optical multiple correlation detector.

The above-mentioned correlation detection optical apparatus uses only spatial light modulators available in the market. It will be easy to add additional reference patterns, and to modify the reference patterns. This advantage can be said about the system of Example 2 using weight pattern mask. Further, if the detection area for measuring the correlation in response to one reference pattern is broaden to a certain range, a correlator output will be gained on the basis of the position-shift invariant analogy which is different from the inner product. If the detection area is limited, the correlation output corresponding to the inner product can be gained. Therefore, both or either one can be used for a output from the units of the first intermediate layer so as to compose the system.

When additional category need be added to the system, a training set of new input pattern and the desired output patterns are added to, and the training for learning should be done to the connection weights from the units of the first intermediate layer to the units of the output layer, and the biasing values of the same. When the pattern which can not be recognized is found, there should be increase the number of the reference patterns, i.e. the number of the units of the first intermediate layer should be increased, and the reference patterns, i. e. the connection weight patterns should be appropriately modified. Especially when the reference patterns are presented in parallel, the performance of recognition can be easily improved without any influence to the reference patterns which have been presented. The modification or the addition of the reference patterns can be easily attained by using a spatial light modulator. Such modification of the system, i.e. the addition and modification of the reference patterns is the big change of the optical system, and such big change of the system does not need severe real time operation, appart from the ordinary training of the system. Therefore, in such case, a wet processing such as silver halide photographic development process and a low speed spatial light modulator can be used to compose the effective neural network system.

The inventive optical processing assembly system can be easily operated in relatively less number of the connection, even when the input pattern is complicated, and even when the number of the categories to which the pattern to be reviewed should be classified becomes greater, and therefore, is readily installed.

The recognition of pattern can be efficiently carried out at a high rate to get the useful result, and further, the useful recognition can be given with less influence of the position shift and deformation of the input pattern.

While the present invention has been described with reference to the particular illustrative embodiments, it is not to be restricted by those embodiments but only the appended claims. It is to be appreciated that those skilled in the art can change or modify the embodiments without departing from the scope and spirit of the present invention.

## Claims

1. An artificial neural network pattern recognition system *which comprises*

   (a) at least four layers comprising an input layer, a first intermediate layer, a second intermediate layer and a output layer, as basic layers, in its layered structure of said network system;

   (b) each of the layers having respective units, and each of the units in the respective layers being positioned side by side,

   (c) connections to connect each of the units contained in the input layer respectively with each of the units contained in the first intermediate layer, and to connect each of the units contained in the intermediate layer respectively with each of the units contained in the second intermediate layer, and to connect each of the units contained in the second intermediate layer respectively with each of the units contained in the output layer and each of the connections having respective weighting value;

   (d) the respective weighting value for connecting respectively the units of the input layer with the units of the first intermediate layer with the first intermediate layer adjacent to the input layer being fixed;

   (e) respective output value to be fed from each of the units in the first intermediate layer being represented by analogical value (as it is) or digital value by multiplenary coded value (binary or ternary or more coded), in response to the cross-correlation between the respective weighting pattern (weight value distribution) arranged to connect respectively each of the units contained in the input layer to each of the units contained in the first intermediate layer, and the input pattern to be fed from the units contained in the input layer to the units contained in the first intermediate layer; and

   (f) a means of determining all of the respective weighting value to connect each other between the units contained in each adjacent layers, from the first intermediate layer to the output layer, with supervised learning.

2. The optical neural network system in accordance with claim 1,
   wherein one of said weight value patterns is analogic to one of the patterns contained in the group of said input patterns.

3. The optical neural network system in accordance with claim 1 or 2,
   wherein the calculation to obtain said cross-correlations, i.e. the calculation to connect from the units of the input layer in the units in the first intermediate layer is carried out by optical correlation calculation.

4. The optical neural network system in accordance with claim 3,

wherein the calculation to obtain said cross-correlations is carried out on the basis of the analogy of the patterns formed on the optical Fourier transform plane.

5. The optical neural network system in accordance with claim 4,

wherein the calculation to obtain said cross-correlations i.e. the calculation to connect from the units of the input layer in the units in the first intermediate layer is carried out by an optical correlation sensing device comprising
at least

(1) a coherent beam source;

(2) a first spatial light modulator to modulate a first complex amplitude distribution of a first beam, in response to the respective input pattern and each of the reference patterns;

(3) a first Fourier transformation lens to Fourier-transform optically the first complex amplitude distribution of the first beam to a first Fourier transform light distribution formed on a second spatial light modulator;

(4) a second spatial light modulator to modulate the a second beam complex amplitude distribution in response to the said first beam Fourier transformation light distribution;

(5) a second Fourier transformation lens to Fourier-transform optically said second beam complex amplitude distribution impressed on a the display assembly of said second spatial light modulator into a second Fourier transformation light distribution;

(6) a sensing device to sense the light distribution transformed from said second Fourier transformation light distribution,

characterized by

(a) displaying each of the reference patterns to be used for sensing the cross-correlation distribution on an array of the said first spatial light modulator; wherein each of the reference patterns has respectively one input pattern at its respective neighbor on the array;

(b) the first Fourier transform lenses being in respective array, in correspondence with each couple of each of the reference patterns with each of the input patterns;

(c) the second Fourier transform lenses being arranged in respective array corresponding to each of the Fourier transformation patterns formed at the said second spatial light modulator from the first Fourier transform lens array;

(d) the cross-correlation being sensed on the basis of the analogy of the Fourier transform patterns formed on the first Fourier transform plane.

6. The optical neural network system in accordance with any one of claims 3 to 5,

wherein the output from the optical calculation to obtain said cross-correlations is in response to the whole light power from the limited range corresponding to the optical correlation pattern.

7. The optical neural network system in accordance with any one of claims 3 to 5,

wherein the output from the optical calculation to obtain said cross-correlations is in response to both of the whole light power from the limited range in which the optical correlation pattern is displayed, and the light power in the neighbor of the peak of the light intensity in the limited range in which the optical correlation pattern is displayed.

8. An artificial neural network pattern recognition system in accordance with any one of claims 3 to 7,

wherein a output to fed from the first intermediate layer is value which has been respectively obtained by normalization of the output of the optical correlation calculation on the basis of the value corresponding to the number of the domains constituting said pattern to be tested, or to the number of the domains constituting both of the pattern to be reviewed and at least one weighting value patterns; and all of the respective connection weighting values of the connections to connect each of the units contained in said first intermediate layer to the units in said second intermediate layer, and to connect each of the units in the second intermediate layer to the units contained in said output layer are determined with supervised learning.

9. The optical neural network system in accordance with claim 8,

wherein said values corresponding to the numbers of the domains constituting said pattern to be reviewed are the values in response to the light intensity of the transparent light which passes through the display indicating (impressing) the pattern to be tested or alternatively that of the reflected light from the display indicating ( impressing) the pattern to be reviewed.

10. The optical neural network system in accordance with claim 8,

wherein said value corresponding to the number of the domains consitituting said pattern to be reviewed are a tatal combination of the values in response to the intensity of the transparent (transmission) or reflection light respectively through or from the pattern to be reviewed and one of the reference patterns or one or more reference patterns which are represented on the display.

11. The optical neural network system in accordance with claim 8,

wherein said light intensity of the cross-correlation between the input pattern and each of said reference patterns may be a peak value among the auto-correlation output or the cross-correlation output of the pattern to be reviewed with each of the reference patterns.

12. The optical neural network system in accordance with claim 8,

wherein said light intensity of the cross-correlation between the input pattern and each of said reference patterns is a whole light power or an average light power found in the radiation range (the whole distribution) of an auto-correlation output or cross-correlation output of the pattern to be reviewed, and the respective reference pattern.

13. The optical neural network system in accordance with claim 8,

wherein said light intensities of the correlation respectively resulting from each of said reference patterns and the pattern to be reviewed may be determined by both of a peak value of the cross-correlation output or the auto-correlation output of the pattern to be reviewed with each of the reference patterns; and a whole light power or an average light power found in the radiation range (the whole distribution) of an auto-correlation output or cross-correlation output between the pattern to be reviewed and the respective reference pattern.

14. The optical neural network system in accordance with claim 8,

wherein said light intensities of the correlation respectively to each of said reference patterns may be obtained from the range having a linearity of the light intensities of the beam from a two-dimensional electro-photo transducer, or from the range in which the portion of the light power of the correlation output distribution exceeds the maximum receiving light power of said two-dimensional electro-photo transducer, or exceeds the power range in which said two-dimensional electro-photo transducer has linear response.

15. The optical neural network system in accordance with claim 8,

wherein the calculation for the correlation between the pattern to be reviewed and each of the reference patterns is carried out by using a filter basing on a Fourier transformation hologram.

16. The optical neural network system in accordance with claim 8,

wherein the calculation for the correlation between the pattern to be reviewed and each of the reference patterns is carried out by executing separately and respectively a jointed Fourier transform of the pattern to be reviewed and each of the reference patterns so as to obtain an intensity pattern; and then Fourier-transforming the obtained intensity pattern optically and separately, or alternatively by executing together a joint Fourier-transformation of the pattern to be reviewed and each of the reference patterns so as to produce a respective intensity pattern; and then, Fourier-transforming optically together the obtained intensity pattern.

17. The optical neural network system in accordance with claim 8,

wherein the calculation for the correlation between the pattern to be reviewed and each of the reference patterns is carried out by superposing each other the pattern to be reviewed and each of the reference patterns, as shown by a light transmission distribution or light reflection distribution, and irradiating the superpose-obtained one with an incoherent beam so as to produce a light intensity distribution of the reflection and the transmission from there.

# FIG. 1

# FIG. 2

INPUT LAYER     MEDIUM LAYER     OUTPUT LAYER

CORRELATION OUTPUT

FIG. 3

V
T
N
E
A          H

FIG. 4

FIG. 5

(a)          (b)          (c)

E          E
H          H

FIG. 6

## FIG. 7

# FIG. 8

INPUT LAYER    UNIT    FIRST MEDIUM LAYEL    SECOND MEDIUM LAYER    UNIT    OUTPUT LAYER

# FIG. 9

INPUT LAYER    UNIT    MEDIUM LAYEL    UNIT    OUTPUT LAYER

22

FIG. 10

FIG. 11

# FIG. 12

FIG. 13